# EUROPÄISCHE PATENTSCHRIFT

(11) **EP 1 306 582 B1**
(45) Veröffentlichungstag und Bekanntmachung des Hinweises auf die Patenterteilung: **08.04.2009**
(21) Anmeldenummer: 02023255.9
(22) Anmeldetag: 17.10.2002
(51) Int. Cl.: F16H 59/12, F16H 59/02

(54) **Getriebesteuerung**
Transmission control device
Système de commande de boîte de vitesses

(30) Priorität: 26.10.2001 DE 10153039
(43) Veröffentlichungstag der Anmeldung: 02.05.2003
(73) Patentinhaber: AUDI AG, 85045 Ingolstadt (DE)
(72) Erfinder: Kischkat, Ralf, Dr., 85057 Ingolstadt (DE)
(74) Vertreter: Thielmann, Frank

(56) Entgegenhaltungen:
- EP-A- 0 769 640
- WO-A-02/097307
- DE-A- 19 736 406
- US-A- 6 151 977
- US-B1- 6 246 127

## Beschreibung

Die Erfindung betrifft eine Getriebesteuerung sowie ein Getriebe.

Aus der Praxis sind Personenkraftwagen mit Automatikgetrieben bekannt, bei denen neben Fahrprogrammen P (Parken), R (Rückwärts), N (Neutral) und D (Fahren) ein oder mehrere Fahrprogramme auswählbar sind, in welchen sich die Übersetzung manuell einstellen läßt. Die manuelle Einstellung der Übersetzung erfolgt dabei entweder über einen Fahrprogrammvorwahlhebel und / oder über sog. Tipphebel /-tasten am Lenkrad. Bei einer Einstellung der Übersetzung über die Tipphebel /-tasten werden nur Übersetzungen akzeptiert, die bei der aktuellen Geschwindigkeit auch mit einer zulässigen Motordrehzahl fahrbar sind.

Aus DE 198 28 039 A1 ist eine Bedienvorrichtung für ein Getriebe bekannt, bei welcher als Betätigungselement ein Tastschalter vorgesehen ist, mit dem das Fahrprogramm (P, R, N, D) für das Getriebe veränderbar ist.

Aus der WO 02/097307 A1 ist eine Schaltvorrichtung für ein Automatikgetriebe eines Fahrzeugs bekannt, bei welcher über einen Fahrprogrammwahlhebel ein Fahrprogramm und über Bedienungstasten innerhalb eines gewählten Fahrprogramms während Vorwärtsfahrt eine Übersetzung auswählbar ist. Gemäß der WO 02/097307 A1 sollen auch Mehrfachschaltungen möglich sein, also Schaltungen über mehrere Gangstufen hinweg. Dazu ist insbesondere ein Impulszähler vorgesehen, um Impulse zu summieren und dann eine den summierten Impulsen entsprechende Schaltung durchzuführen.

Eine weitere Schaltvorrichtung für ein Automatikgetriebe ist aus der US 6 151 977 bekannt. Auch bei dieser Schaltvorrichtung sind einerseits Bedienungselemente für einen Gangwechsel (Gear Shift) sowie andererseits weitere Bedienungselemente für die Auswahl des Fahrprogramms (Mode Select) vorgesehen.

Eine Getriebesteuerung gemäß dem Oberbegriff des Anspruch 1 ist aus der DE 197 36 406 A1 bekannt. Bei dieser Getriebesteuerung sind ein Fahrprogrammvorwahlhebel und Bedienungstasten vorgesehen, wobei mit den Bedienungstasten innerhalb eines vorgewählten Fahrprogramms während Vorwärtsfahrt die Übersetzung veränderbar ist, und wobei mit den Bedienungstasten im Stand ein Fahrprogramm auswählbar ist. Es besteht allerdings die Gefahr, dass bei der Ermittlung des Fahrzustandes Fehler auftreten.

Der Erfindung liegt die Aufgabe zugrunde, den Bedienungskomfort und die Betriebssicherheit bei der Betätigung eines Getriebes ohne zusätzliche Bedienungselemente zu erhöhen.

Die Lösung dieser Aufgabe erfolgt erfindungsgemäß mit den Merkmalen der Ansprüche 1 bzw. 9.

Gemäß der Erfindung ist bei einer Getriebesteuerung für eine Übersetzungswechselvorrichtung eines Getriebes vorgesehen, dass in einem Zeitpunkt S die Fahrzeuggeschwindigkeit ermittelt wird und danach in Abhängigkeit von einem Vergleich der Fahrzeuggeschwindigkeit mit einem vorgegebenen Stellenwert eine Änderung der Übersetzung oder ein Wechsel des Fahrprogramms erfolgt, so dass mit Bedienungstasten innerhalb eines vorgewählten Fahrprogramms während Vorwärtsfahrt die Übersetzung veränderbar ist und dass darüber hinaus mit den Bedienungstasten im Stand ein Fahrprogramm auswählbar ist, woraufhin ein Signal erzeugt wird, aufgrund dessen mit der Übersetzungswechselvorrichtung eine dem gewählten Fahrprogramm R, D, N, 1, 2 entsprechende Übersetzung einstellbar ist. Die erfindungsgemäße Getriebesteuerung hat neben einem verbesserten Komfort eine erhöhte Sicherheit zur Folge, da nur im Stand mit den Betätigungstasten das Fahrprogramm gewechselt werden kann.

Vorzugsweise ist die Getriebesteuerung mit einem Bremsensensor verbunden, wobei eine Betätigung der Bedienungstasten im Stand nur dann zu einem Signal zur Einstellung einer einem Fahrprogramm entsprechenden Übersetzung führt, wenn der Bremsensensor eine Betätigung der Fahrzeugbremsen nachweist. Dadurch wird die Sicherheit weiter erhöht.

Eine weitere Sicherheitserhöhung ergibt sich, wenn die Getriebesteuerung mit einem Vorwahlhebelsensor verbunden ist und eine Betätigung der Bedienungstasten im Stand nur dann zu einem Signal zur Einstellung einer einem Fahrprogramm entsprechenden Übersetzung führt, wenn von dem Vorwahlhebelsensor bestimmte, insbesondere von dem Fahrprogramm Parken (P) und/oder Neutral (N) verschiedene Fahrprogramme nachgewiesen werden. Durch die Maßnahme, die Wirksamkeit der Bedienungstasten im Stand bei bestimmten Fahrprogrammen zu unterdrücken, ist es möglich, die mit der Erfindung zur Verfügung gestellte Funktionalität in Stufen in den Markt einzuführen und nach und nach die Verfügbarkeit der Tipptasten zu erhöhen. Dadurch können Fehlbedienungen durch den Benutzer, der mit jeder neuen Fahrzeugvariante hinzulernt, vermieden werden. Vorteilhaft ist in einer Einführungsphase der neuen Funktionalität auch eine Blockierung des Fahrprogramms für Rückwärtsfahrt (R), welches dann im Stand nicht mit den Bedienungstasten erreichbar ist.

Gemäß einer bevorzugten Ausführungsform ist vorgesehen, dass eine Betätigung einer der Bedienungstasten nur dann in die Auswertung einfließt, wenn diese Betätigung eine voreingestellte Einwirkdauer (erster Einwirkdauerschwellenwert) auf die Bedienungstaste, vorzugsweise einer Einwirkdauer von 0,2 sec überschreitet. Dadurch wird eine Absicherung gegen unbeabsichtigtes Ändern des Fahrprogramms gewährleistet.

Ferner ist gemäß einer weiteren bevorzugten Ausführungsform vorgesehen, dass eine Betätigung einer der Bedienungstasten für eine Einwirkdauer, die einen zweiten Einwirkdauerschwellenwert, vorzugsweise 0,5 sec überschreitet, einen Übersetzungswechsel um zwei Stufen oder aus dem Fahrprogramm Parken (P) heraus in ein Fahrprogramm auslöst, wobei im letztgenannten Fall das Fahrprogramm Neutral (N) übersprungen wird. Eine solche Ausgestaltung führt zu einem hohen Bedienungskomfort.

Wenn ein Ausgang zu einem akustischen und/oder optischen Signalgeber vorhanden ist, welcher in Abhängigkeit von der Betätigung der Bedienungstasten akustische bzw. optische Signale aussendet, wird dem Fahrzeugbenutzer die Bedienung erleichtert und er kann ferner auf gefährliche Situationen hingewiesen werden. Dies gilt insbesondere, wenn die akustischen bzw. optischen Signale nur bei einem Wechsel der Übersetzung ausgesandt werden.

Mit einen Ausgang zu einem Aktuator, welcher bei einem Wechsel des Fahrprogramms im Stand den Fahrprogrammvorwahlhebel entsprechend einstellt, wird der Bedienungskomfort noch weiter erhöht. Der Fahrzeugbenutzer kann nach einer Einstellung eines Fahrprogramms mit den Bedienungstasten unmittelbar mit dem Fahrprogrammvorwahlhebel weitere Einstellungen vornehmen, ohne die vorherige Einstellung des Fahrprogramms mit den Bedienungstasten an dem Fahrprogrammvorwahlhebel zunächst nachvollziehen zu müssen. Ein Aktuator ist vorteilhaft sowohl bei einem rastierenden als auch bei einem nicht-rastierenden Fahrprogrammvorwahlhebel verwendbar, wobei der Fahrprogrammvorwahlhebel sowohl als Lenkstockhebel ( Anordnung des Wählhebels nach Art einer Lenkradschaltung) oder Wählhebel in der Mittelkonsole (Anordnung des Wählhebels nach Art einer Knüppelschaltung) ausgebildet sein kann. Bei Verwendung eines nicht-rastierenden Fahrprogrammvorwahlhebels kann auf einen nachführenden Aktuator verzichtet werden.

Wenn mit den Bedienungstasten ein Wechsel zwischen einem Fahrprogramm für Vorwärtsfahrt und einem Fahrprogramm für Rückwärtsfahrt durchführbar ist, erleichtert dies das Rangieren.

Die vorgenannten Vorteile ergeben sich insbesondere bei einem Getriebe, das eine Getriebesteuerung nach einem der Ansprüche 1 bis 8 aufweist.

Weitere vorteilhafte Ausgestaltungen und Weiterbildungen der Erfindung ergeben sich aus den Unteransprüchen sowie aus der Beschreibung im Zusammenhang mit den Zeichnungen.

Es zeigen:
- Fig. 1.: eine schematische Darstellung eines Kraftfahrzeuges mit einem erfindungsgemäßen Getriebe und einer erfindungsgemäßen Getriebesteuerung gemäß einer ersten Ausführungsform,
- Fig. 2.: ein Flussdiagramm, mit welchem die erfindungsgemäße gemäß der ersten Ausführungsform Getriebesteuerung erläutert wird, und
- Fig. 3: ein Flussdiagramm, mit welchem eine erfindungsgemäße Getriebesteuerung gemäß einer zweiten Ausführungsform erläutert wird.

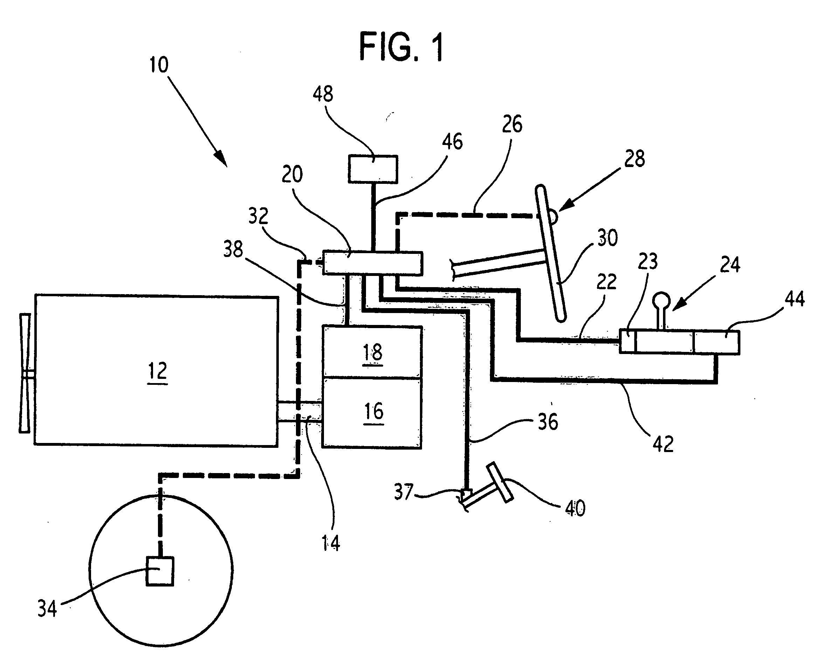

Das in Fig. 1. gezeigte Kraftfahrzeug 10 weist einen Motor 12 auf, welcher über eine Welle 14 mit einem Getriebe 16, im gezeigten Falle mit einem Automatikgetriebe verbunden ist. Das Getriebe 16 weist eine Übersetzungswechselvorrichtung 18 auf, welche aufgrund von Signalen einer Getriebesteuerung 20 unterschiedliche Übersetzungen für Rückwärts- und Vorwärtsfahrten einstellt. Die Getriebesteuerung 20 ist über eine erste Signalleitung 22 mit einem Vorwahlhebelsensor 23 eines Fahrprogrammvorwahlhebels 24 und über eine zweite Signalleitung 26 mit Bedienungstasten 28 verbunden, welche im Bereich eines Lenkrades 30 oder an diesem selbst angeordnet sind. Ferner ist die Getriebesteuerung 20 über eine dritte Signalleitung 32 mit einem Fahrzeuggeschwindigkeitssensor 34 und über eine vierte Signalleitung 36 mit einem Bremsensensor 37 verbunden.

Zur Betätigung der Übersetzungswechselvorrichtung 18 hat der Fahrzeugbenutzer die Möglichkeit, entweder den Fahrprogrammvorwahlhebel 24 zu ergreifen und zu verlagern oder die Bedienungstasten 28 zu drücken, wobei die Bedienungstasten 28 eine "-"Taste und eine "+"Taste aufweisen. Je nachdem, in welcher Fahrsituation sich das Kraftfahrzeug 10 befindet, erzeugt dann die Getriebesteuerung 20 ein Ausgangssignal, welches über eine erste Ausgangssignalleitung 38 an die Übersetzungswechselvorrichtung 18 gesendet wird und eine entsprechende Übersetzung einstellt.

Wenn bei stehendem Kraftfahrzeug 10 und betätigtem Bremspedal 40 oder betätigter Bremse mit den Bedienungstasten 28 ein neues Fahrprogramm eingestellt wird, erzeugt die Getriebesteuerung 20 femer ein Signal, welches über eine zweite Ausgangssignalleitung 42 an einen Aktuator 44 gesendet wird, welcher den Fahrprogrammvorwahlhebel 24 entsprechend dem gewählten Fahrprogramm nachführt. In der bevorzugten Ausführungsform ist der Fahrprogrammvorwahlhebel dabei rastierend ausgeführt. Ist gemäß den nachfolgend beschriebenen Programmabläufen ein Signalton zu senden, erfolgt dies unter Steuerung der Getriebesteuerung 20 über eine Dritte Ausgangssignalleitung 46 und einen Signalgeber 48 für ein akustisches Signal, insbesondere einen Signalton.

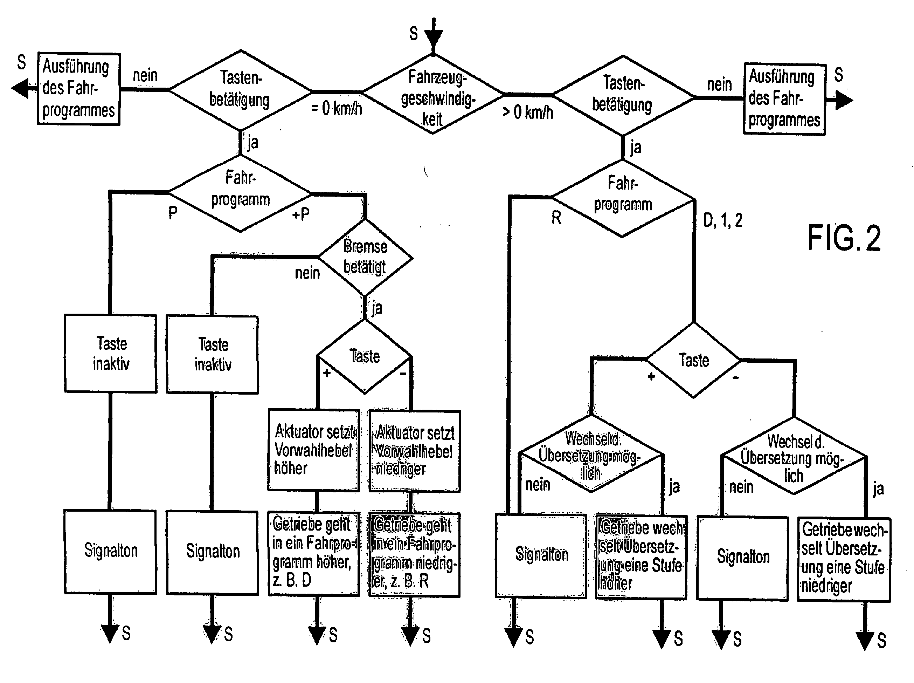

Die Funktionszusammenhänge zwischen der Betätigung einer der Bedienungstasten 28, der Getriebesteuerung 20, der Übersetzungswechselvorrichtung 18, dem Aktuator 44 und dem Signalgeber 28 sind in Fig. 2 erläutert.

Von der Getriebesteuerung 20 wird bei Inbetriebsetzung des Kraftfahrzeuges 10 im Zeitpunkt S zunächst die Fahrzeuggeschwindigkeit ermittelt. Ist diese gleich 0 km/h oder kleiner als ein vorgegebener Stellenwert ≠ 0, beispielsweise 1 km/h, arbeitet die Getriebesteuerung 20 den in Fig. 2 in der linken Zeichnungshälfte gezeigten Programmablauf ab, welcher die Funktion der Getriebesteuerung 20 bei stehendem Fahrzeug beschreibt. Ist die Geschwindigkeit größer 0 km/h, verzweigt die Steuerung in den in Fig. 2 rechts dargestellten Programmablauf, der die Funktion der Getriebesteuerung 20 bei fahrendem Kraftfahrzeug 10 beschreibt.

Wenn das Kraftfahrzeug 10 steht (linker Zweig), wird zunächst abgefragt, ob eine Betätigung der Tasten 28 vorliegt. Ist diese Frage mit Nein zu beantworten, wird das an dem Fahrprogrammvorwahlhebel 24 eingestellte Fahrprogramm ausgeführt, welches sowohl dazu führen kann, dass das Kraftfahrzeug 10 in Ruhe verbleibt (Fahrprogramme P und N) oder sich in Bewegung setzt (Fahrprogramme R, D, 1, 2).

Die Erfindung ist mit Getrieben ausführbar, die verschiedenartigste Fahrprogramme ausführen können. Neben den beispielhaft genannten Fahrprogrammen P, N, R, D, 1, 2 sind dies beispielsweise Fahrprogramme 3, 4 und S.

Wenn (im linken Programmzweig) eine Betätigung der Bedienungstasten 28 von der Getriebesteuerung 20 festgestellt wird, überprüft diese zunächst, ob das Fahrprogramm P eingestellt ist oder nicht. Ist das Fahrprogramm P eingestellt, sind die Bedienungstasten 28 inaktiv und es erfolgt lediglich ein Signalton und die Steuerung geht in ihrer Abfrage wieder an den Ausgangspunkt S. Ist ein von P verschiedenes Fahrprogramm eingestellt, erfolgt als weitere Abfrage die Abfrage des Bremsensensors 37, mit welchem festgestellt wird, ob die Bremse betätigt ist oder nicht. Ist die Bremse nicht betätigt, sind die Bedienungstasten 28 wiederum inaktiv und es erfolgt ein Signalton und eine Rücksetzung der Steuerung an den Ausgangspunkt S. Die Abfrage des Bremsensensors 37 und die Abfrage des eingestellten Fahrprogramms dienen beide dazu, ein unbeabsichtigtes Inbewegungsetzen des Kraftfahrzeuges 10 durch versehentliche Tastenbedienung zu verhindern.

Ist ein von dem Fahrprogramm P verschiedenes Fahrprogramm an dem Fahrprogrammvorwahlhebel eingestellt, will also der Fahrzeugbenutzer das Fahrzeug bewegen, und ist ferner die Bremse betätigt, der Fahrzeugbenutzer also aufmerksam und in jedem Fall vor unbeabsichtigten Fahrzeugbewegungen geschützt, wird abgefragt, ob die Tastenbetätigung eine solche der "+"-Taste oder eine solche der "-"-Taste ist. Je nach Bedienung der Bedienungstaste 28 setzt der Aktuator 44 den Fahrprogrammvorwahlhebel 24 höher oder niedriger, wobei zeitnah dazu oder gleichzeitig die Übersetzungswechselvorrichtung 18 das Getriebe 16 in eine Übersetzung setzt, die dem Fahrprogramm entspricht, das durch die Betätigung der Bedienungstasten 28 ausgewählt worden ist. Nach der Aktion des Aktuators 44 und der Übersetzungswechselvorrichtung 18 geht das Programm an den Ausgangspunkt S zurück.

Wenn sich das Kraftfahrzeug 10 bewegt, also die Fahrzeuggeschwindigkeit größer 0 km/h ist, verzweigt die Steuerung - wie bereits zuvor ausgeführt - in den rechts gezeigten Programmablauf, worauf hin zunächst die Abfrage erfolgt, ob eine Betätigung der Bedienungstasten 28 vorliegt. Liegt keine Betätigung vor, wird das an dem Fahrprogrammvorwahlhebel 24 eingestellte Fahrprogramm ausgeführt. Wenn jedoch eine Tastenbetätigung erfolgt, wird anschließend abgefragt, welches Fahrprogramm eingestellt ist. Wird festgestellt, dass das Fahrprogramm R (Rückwärtsfahrt) eingestellt ist, wird lediglich ein Signalton erzeugt, da ein Wechsel der Übersetzungen im Fahrprogramm Rückwärtsfahren nicht möglich ist, da lediglich eine Übersetzung dafür vorhanden ist.

Ist jedoch als Fahrprogramm eines der Programme D, 1 oder 2 für Vorwärtsfahrt eingestellt, erfolgt eine Abfrage, ob die "+" oder "-"-Bedienungstaste der Bedienungstasten 28 betätigt worden ist. Anschließend erfolgt in jedem Falle eine Abfrage, ob ein Wechsel der Übersetzung möglich ist, um manuell einen Gang höher oder niedriger zu schalten. Ist es beim Betätigung der "+"Taste möglich, einen Gang höher zu schalten, sendet die Getriebesteuerung 20 über die erste Ausgangssignalleitung 38 ein Signal an die Übersetzungswechselvorrichtung 18, woraufhin dann das Getriebe 16 den nächst höheren Gang einlegt. Das an dem Fahrprogrammvorwahlhebel 24 eingestellte Fahrprogramm bleibt dabei jedoch unverändert. Nach dieser Aktion kehrt die Steuerung an den Ausgangspunkt S zurück.

Wird bei fahrendem Kraftfahrzeug 10 und einem eingestellten Fahrprogramm für Vorwärtsfahrt (D, 1, 2) die "-"Taste betätigt und ist gleichzeitig ein Wechsel der Übersetzung möglich, sendet die Getriebesteuerung 20 ein Signal an die Übersetzungswechselvorrichtung 18, woraufhin das Getriebe 16 einen Gang heruntergeschaltet wird. Auch nach dieser Maßnahme kehrt die Steuerung an den Ausgangspunkt S zurück.

Ist ein Wechsel der Übersetzung nicht möglich, wird ein Signalton erzeugt und die Steuerung kehrt an ihren Ausgangspunkt S zurück.

Vorstehend wurde die Funktion der Getriebesteuerung 20 mit Bedienungstasten 28 beschrieben, die eine "-"Taste und eine "+"Taste aufweisen. Die Erfindung ist jedoch auch mit einer einzelnen Bedienungstaste ausführbar, wenn die Unterscheidung "-" oder "+" durch eine Abfrage "Taste kurz gedrückt" oder "Taste lang gedrückt" ersetzt wird. Die Erfindung ist ferner auch dann ausführbar, wenn mit lediglich einer Taste gearbeitet wird und deren Betätigung nur einem der Zweige unterhalb der Abfrage der Tasten auf Betätigung von "-" oder "+" entspricht.

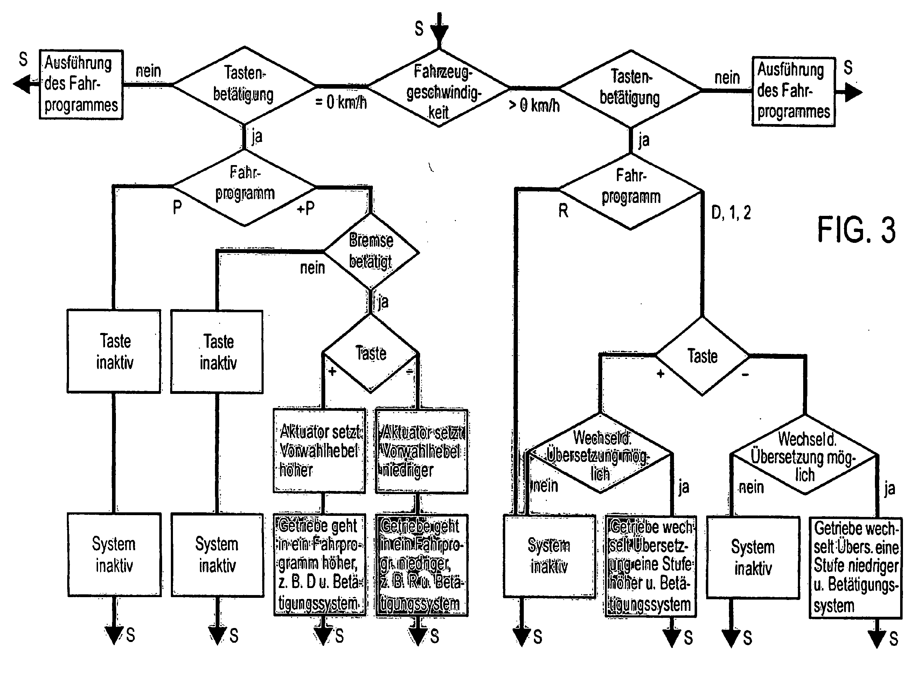

Die Getriebesteuerung gemäß der zweiten Ausführungsform, die durch das Flussdiagramm in Figur 3 erläutert ist, unterscheidet sich von der Getriebesteuerung gemäß der ersten Ausführungsform durch die Ansteuerung des Signalgebers 48, welcher - sofern ein Wechsel der Übersetzung oder des Fahrprogramms nicht erfolgt - inaktiv bleibt und ein Signal nur dann aussendet, wenn entweder das Fahrprogramm und / oder die Übersetzung gewechselt wird. Dabei erfolgen vorzugsweise unterschiedliche Signale für den Wechsel eines Fahrprogramms und den Wechsel einer Übersetzung, wobei es insbesondere vorgesehen sein kann, bestimmten Fahrprogrammen und /oder Übersetzungen bestimmte Signale, insbesondere Signaltöne zuzuordnen.

## Patentansprüche

1. Getriebesteuerung für eine Übersetzungswechselvorrichtung (18) eines Getriebes (16), welche über einen Fahrprogrammvorwahlhebel (24) und/oder Bedienungstasten (28) betätigbar ist, wobei mit den Bedienungstasten (28) innerhalb eines vorgewählten Fahrprogrammes (D, 1, 2) während Vorwärtsfahrt die Übersetzung veränderbar ist, und wobei mit den Bedienungstasten (28) im Stand ein Fahrprogramm (R, D) auswählbar ist,
**dadurch gekennzeichnet,**
**dass** in einem Zeitpunkt S die Fahrzeuggeschwindigkeit ermittelt wird und danach in Abhängigkeit von einem Vergleich der Fahrzeuggeschwindigkeit mit einem vorgegebenen Stellenwert eine Änderung der Übersetzung oder ein Wechsel des Fahrprogramms durch die Betätigung des Bedierungstasten (28') erfolgt, woraufhin ein Signal erzeugt wird, aufgrund dessen mit der Übersetzungswechselvorrichtung (18) eine dem gewählten Fahrprogramm (R, D) entsprechende Übersetzung einstellbar ist.

2. Getriebesteuerung nach Anspruch 1, **dadurch gekennzeichnet, dass** die Getriebesteuerung (20) mit einem Bremsensensor (37) verbunden ist und dass eine Betätigung der Bedienungstasten (28) im Stand nur dann zu einem Signal zur Einstellung einer einem Fahrprogramm (R, D, N, 1, 2) entsprechenden Übersetzung führt, wenn der Bremsensensor (37) eine Betätigung der Fahrzeugbremsen nachweist.

3. Getriebesteuerung nach Anspruch 1 oder 2, **dadurch gekennzeichnet, dass** die Getriebesteuerung (20) mit einem Vorwahlhebelsensor (23) verbunden ist und dass eine Betätigung der Bedienungstasten (28) im Stand nur dann zu einem Signal zur Einstellung einer einem Fahrprogramm entsprechenden Übersetzung führt, wenn von dem Vorwahlhebelsensor (23) bestimmte, insbesondere von dem Fahrprogramm Parken (P) und/oder Neutral (N) verschiedene Fahrprogramme nachgewiesen werden.

4. Getriebesteuerung nach einem der Ansprüche 1 bis 3, **dadurch gekennzeichnet, dass** eine Betätigung einer der Bedienungstasten (28) nur dann in die Auswertung einfließt, wenn diese Betätigung eine voreingestellte Einwirkdauer (erster Einwirkdauerschwellenwert) auf die Bedienungstaste, vorzugsweise eine Einwirkdauer von 0,2 sec überschreitet.

5. Getriebesteuerung nach einem der Ansprüche 1 bis 4, **dadurch gekennzeichnet, dass** eine Betätigung einer der Bedienungstasten (28) für eine Einwirkdauer, die einem zweiten Einwirkdauerschwellenwert, vorzugsweise 0,5 sec überschreitet, einem Übersetzungswechsel um 2 Stufen oder aus dem Fahrprogramm Parken (P) heraus in ein Fahrprogramm auslöst, wobei im letztgenannten Fall das Fahrprogramm Neutral (N) übersprungen wird.

6. Getriebesteuerung nach einem der Ansprüche 1 bis 5, **gekennzeichnet durch** einen Ausgang zu einem akustischen und/oder optischen Signalgeber (48), welcher in Abhängigkeit von der Betätigung der Bedienungstasten (28) akustische bzw. optische Signale aussendet, wobei diese akustischen bzw. optischen Signale vorzugsweise nur bei einem Wechsel der Übersetzung und / oder eines Fahrprogramms ausgesandt werden.

7. Getriebesteuerung nach einem der Ansprüche 1 bis 6, **gekennzeichnet durch** einen Ausgang (42) zu einem Aktuator (44), welcher bei einem Wechsel des Fahrprogramms im Stand den Fahrprogrammvorwahlhebel (24) entsprechend einstellt.

8. Getriebesteuerung nach einem der Ansprüche 1 bis 7, **dadurch gekennzeichnet, dass** mit den Bedienungstasten (28) ein variables Schaltschema, insbesondere ein direkter Wechsel zwischen einem Fahrprogramm für Vorwärtsfahrt (D) und einem Fahrprogramm für Rückwärtsfahrt (R) durchführbar ist.

9. Getriebe, **gekennzeichnet durch** eine Getriebesteuerung (20) nach einem der Ansprüche 1 bis 8.

## Claims

1. Gear control means for a gearchange device (18) of gearing (16) that can be operated by means of a driving programme preselection lever (24) and/or operating buttons (28), whereby the transmission can be varied, with a pre-selected driving programme (D, 1, 2), during forward driving, and whereby a driving programme (R, D) can be selected with the operating buttons (28) when the vehicle is standing still,
**characterized in that**
the vehicle's speed is determined at time S and a change in the transmission ratio or of the driving programme then occurs, through use of the operating buttons (28), on the basis of a comparison of the driving speed and a set rating, whereupon a signal is produced on the basis of which, with the gearchange device (18), a transmission ratio corresponding to the selected driving programme (R, D) can be adjusted to.

2. Gear control means in accordance with claim 1, **characterized in that** the gear control means (20) is connected to a brake sensor (37) and **in that** operation of the operating buttons (28) while the vehicle is at a standstill only leads to a signal for setting transmission corresponding to a driving programme (R, D, N, 1, 2), if the brake sensor (37) detects that the handbrake has been applied.

3. Gear control means in accordance with claims 1 or 2, **characterized in that** the gear control means (20) is connected to a preselection lever sensor (23) and that use of the operating buttons (28), while the vehicle is at a standstill, only leads to the production of a signal for the adjustment to gearing corresponding to a driving programme when driving programmes differing from the driving programme determined by the preselection lever sensor (23), and particularly from the driving programmes park (P) and/or neutral (N), are detected.

4. Gear control means in accordance with one of claims 1 to 3, **characterized in that** use of the operating buttons (28) is only input into the evaluation means when this use exceeds a preset actuation period (first actuation duration threshold) on the operating buttons, preferably an actuation period of 0.2 seconds.

5. Gear control means in accordance with one of claims 1 to 4, **characterized in that** use of one of the operating buttons (28) for a period of actuation that exceeds a second threshold of the duration of actuation, preferably 0.5 seconds, starts a gear change by two stages, or starts a gear change that disengages the parking (P) driving programme and engages another driving programme, whereby, in the latter case, the driving programme neutral (N) is skipped.

6. Gear control means in accordance with one of claims 1 to 5, **characterized by** an output to an acoustic and/or optic signal transducer (48), which transmits acoustic or optic signals on the basis of use of the operating buttons (28), whereby these acoustic or optic signals are preferably only transmitted in the case of a change of transmission ratio and/or of a driving programme.

7. Gear control means in accordance with one of claims 1 to 6, **characterized by** an output (42) to an actuator (44) that adjusts the driving programme preselection lever (24) in the case of a change of driving programme while the vehicle is at a standstill.

8. Gear control means in accordance with one of claims 1 to 7, **characterized in that** variable circuitry, particularly a direct change between a driving programme for forward driving (D) and a driving programme for reversing (R) can be used by means of the operating buttons (28).

9. Gearing in accordance with one of claims 1 to 8.

## Revendications

1. Commande de boîte de vitesses pour un dispositif de changement de transmission (18) d'une boîte de vitesse (16), laquelle est actionnable par le biais d'un levier de présélection de programme de marche (24) et/ou de touches de commande (28), la transmission est modifiable avec les touches de commande (28) à l'intérieur d'un programme de marche présélectionné (D, 1, 2) durant la marche en avant et dans lequel un programme de marche (R, D) est sélectionnable à l'arrêt avec les touches de commande (28),
**caractérisée en ce que**
la vitesse du véhicule est détectée à un instant S et après, en fonction d'une comparaison de la vitesse du véhicule avec une valeur de réglage prédéterminée, un changement de la transmission ou un changement du programme de marche par l'actionnement des touches de commande (28)a lieu, sur quoi un signal est généré, grâce auquel une transmission correspondant au programme de marche sélectionné (R, D) est réglable avec le dispositif de changement de transmission (18).

2. Commande de boîte de vitesses selon la revendication 1, **caractérisée en ce que** la commande de boîte de vitesses (20) est reliée à un capteur de frein (37) et **en ce qu'**un actionnement des touches de commande (28) à l'arrêt laisse alors passer un signal pour le réglage d'une transmission correspondant à un programme de marche (R, D, N, 1, 2) seulement quand le capteur de frein (37) indique un actionnement des freins du véhicule.

3. Commande de boîte de vitesses selon la revendication 1 ou 2, **caractérisée en ce que** la commande de boîte de vitesses (20) est reliée à un capteur de levier de sélection (23) et **en ce qu'**un actionnement des touches de commande (28) à l'arrêt laisse alors passer un signal pour le réglage d'une transmission correspondant à un programme de marche seulement quand des programmes de marche déterminés, en particulier différents du programme de marche stationnement (P) et/ou neutre (N), sont indiqués à partir du capteur de levier de sélection (23)

4. Commande de boîte de vitesses selon l'une des revendications 1 à 3, **caractérisée en ce que** un actionnement d'une des touches de commande (28) est répercuté sur l'évaluation seulement quand cet actionnement dépasse une durée d'action prédéterminée (première valeur seuil de durée d'action) sur la touche de commande, de préférence une durée d'action de 0,2 s.

5. Commande de boîte de vitesses selon l'une des revendications 1 à 4, **caractérisé en ce qu'**un actionnement d'une des touches de commande (28) pour une durée d'action qui dépasse une deuxième valeur seuil de durée d'action, de préférence 0,5 s,déclenche un changement de transmission pour 2 vitesses ou du programme de marche de stationnement (P) à un programme de marche, moyennant quoi le programme de marche Neutre (N) est sauté dans le dernier cas.

6. Commande de boîte de vitesses selon l'une des revendications 1 à 5, **caractérisé par** une sortie vers un émetteur de signaux sonores et/ou optiques (48), lequel émet des signaux sonores ou optiques en fonction de l'actionnement des touches de commande (28), moyennant quoi ces signaux sonores ou optiques sont émis seulement pour un changement de la transmission et/ou d'un programme de marche.

7. Commande de boîte de vitesses selon l'une des revendications 1 à 6, **caractérisée par** une sortie (42) vers un actuateur (44), lequel règle le levier de sélection de programme de marche (24) de manière correspondante pour un changement du programme de marche à l'arrêt.

8. Commande de boîte de vitesses selon l'une des revendications 1 à 7, **caractérisé en ce qu'**un schéma de commutation variable est exécutable avec les touches de commande (28), en particulier un changement direct entre un programme de marche pour la marche en avant (D) et un programme de marche pour la marche en arrière (R).

9. Boîte de vitesse **caractérisée par** une commande de boîte de vitesses (20) selon l'une des revendications 1 à 8.
